# EUROPEAN PATENT APPLICATION

(11) **EP 4 772 138 A1**
(43) Date of publication of application: **08.07.2026**
(21) Application number: 24858256.1
(22) Date of filing: 08.08.2024
(51) Int. Cl.: A61C 17/34

(54) **TOOTHBRUSH HEAD FOR ELECTRIC TOOTHBRUSH**

(30) Priority: 31.08.2023 CN 202311119723
(71) Applicant: Sintree Technology (Singapore) Pte.Ltd, 367903 Singapore (SG); Shanghai Shift Electrics Co., Ltd., Shanghai 201506 (CN)
(72) Inventor: XU, Zhenwu, Shanghai 201506 (CN); ZHANG, Changjin, Shanghai 201506 (CN); ZHANG, Hongtao, Shanghai 201506 (CN)
(74) Representative: WSL Patentanwälte Partnerschaft mbB
(86) International application number: PCT/CN2024/110574
(87) International publication number: WO 2025/044713

(57) **Abstract**

The disclosure discloses a toothbrush head (1) for an electric toothbrush. The toothbrush head (1) includes a brush disc (10), a brush head housing (20), and an oscillating lever (30) that is received in the brush head housing (20) in an oscillatable manner. The oscillating lever (30) is engaged with and drives the brush disc (10). A receiving seat (22) of the brush head housing (20) is provided with a snap-fit member (23) arranged on a snap-fit post (24) protruding from a middle position of the receiving seat (22). A snap-fit guide slot (121) and a snap-fit engagement slot (123) are formed in the mounting block (12) of the brush disc (10), the snap-fit guide slot (121) being in communication with the snap-fit engagement slot (123). The snap-fit member (23) can be inserted into the snap-fit guide slot (121) along an axis (A1) of rotation and rotated into the snap-fit engagement slot (123). When the oscillating lever (30) is engaged with the brush disc (10), a portion of the oscillating lever (30) is inserted into the snap-fit guide slot (121) to prevent the snap-fit member (23) at the receiving seat (22) from disengaging from the snap-fit engagement slot (123) by means of the snap-fit guide slot (121). Therefore, the toothbrush head (1) of the disclosure enables a reliable rotatable connection between the brush disc (10) and the brush head housing (20), and also meets the requirements of simple manufacturing process and low cost.

## Description

### Technical Field

The disclosure relates to the technical field of oral care devices, and in particular to a toothbrush head for an electric toothbrush.

### Background Art

There is a type of electric toothbrush available on the market that uses a toothbrush head having a rotating brush disc. Such a toothbrush head is connected to a drive shaft of a main body of the electric toothbrush, an oscillating lever is provided in the toothbrush head and is directly connected to the drive shaft, an end portion of the oscillating lever drives the brush disc, and the oscillating lever is driven by the drive shaft of the electric toothbrush to transmit reciprocating rotation of the drive shaft about the axis of rotation to the brush disc, causing the brush disc to rotate reciprocally about the central axis of the brush disc.

There is another type of toothbrush head available on the market in which a metal brush head drive shaft is provided. The brush head drive shaft is connected to a plastic oscillating lever and passes through a hollow region within a brush disc, so that the brush head drive shaft can drive the brush disc and also prevent the brush disc from detaching from a brush head housing. However, since the metal brush head drive shaft is additionally provided, the toothbrush head has relatively high cost and is time-consuming and labor-intensive to manufacture.

In order to reduce the manufacturing cost of the brush head, the metal brush head drive shaft is omitted in some toothbrush heads, and the brush disc and the brush head housing are rotatably connected together only by means of a mating structure. For example, a flange is fixedly connected a bottom surface of the brush disc, a sliding slot is provided in an outer side surface of the flange, the housing of the toothbrush head is provided with a flange hook, and when the brush disc is fitted to the housing, the flange hook elastically deforms and snaps into the sliding slot of the flange to form an oscillating fit. However, such a design of the toothbrush head reduces costs but neglects the safety during use, and the brush disc is prone to detaching from the brush head housing. After prolonged use, the plastic parts may wear and age, making the brush disc easily detached from the housing of the toothbrush head, which is extremely dangerous to a user during use.

Therefore, it is desirable to provide a toothbrush head that enables reliable assembly of the brush disc and the brush head housing at a relatively low cost.

### Summary of the Invention

To overcome the shortcomings of the prior art, the disclosure provides a toothbrush head for an electric toothbrush, which comprises: a brush disc having a brush disc base and a mounting block formed on a lower side surface of the brush disc base; a brush head housing forming a cavity, one end of the brush head housing forming a receiving seat for receiving the mounting block, the other end of the brush head housing opening to an open end of the cavity, the brush disc being arranged in the receiving seat and rotating about an axis of rotation A1; and an oscillating lever oscillatably received in the cavity, the oscillating lever engaging with and driving the brush disc; wherein the receiving seat is provided with a snap-fit member arranged on a snap-fit post protruding from a middle position of the receiving seat; a snap-fit guide slot and a snap-fit engagement slot are formed in the mounting block of the brush disc, the snap-fit guide slot is in communication with the snap-fit engagement slot; the snap-fit member is capable of is inserted into the snap-fit guide slot along the axis of rotation A1 and, after rotation, enters the snap-fit engagement slot; when the oscillating lever engages with the brush disc, a portion of the oscillating lever is inserted into the snap-fit guide slot, preventing the snap-fit member at the receiving seat from disengaging from the snap-fit engagement slot by means of the guide slot.

In the above toothbrush head, the snap-fit member is inserted through the snap-fit guide slot and, after rotation, cooperates with the snap-fit engagement slot to connect the components together in a reciprocally rotatable manner. The cooperation of the snap-fit member with the snap-fit engagement slot is locked by the oscillating lever, so that the snap-fit member is retained and received in the snap-fit engagement slot without disengagement. Only when the oscillating lever is removed can the snap-fit member be rotated to a position aligned with the snap-fit guide slot, allowing it to disengage from the snap-fit engagement slot and thus enabling the brush disc to be detached from the brush head housing. Therefore, the toothbrush head of the disclosure not only achieves a reliable rotatable connection between the brush disc and the brush head housing, but also meets the requirements of simple manufacturing process and low cost.

According to one aspect of the disclosure, the oscillating lever comprises an integrally formed oscillating lever cam, the oscillating lever cam is formed on an outer surface of an end of the oscillating lever adjacent to the receiving seat and is offset relative to the axis of oscillation A2 of the oscillating lever; the mounting block of the brush disc is formed with a follower recess, and the oscillating lever drives the brush disc to rotate reciprocally about the axis of rotation A1 by means of engagement of the oscillating lever cam with the follower recess; the portion of the oscillating lever inserted into the snap-fit guide slot is the oscillating lever cam, and the snap-fit guide slot comprises a portion of the follower recess, whereby the oscillating lever cam blocks the snap-fit member from disengaging through the snap-fit guide slot. The disclosure utilizes the oscillating lever cam to block the disengagement of the snap-fit member, ensuring a reliable rotatable connection.

According to another aspect of the disclosure, the receiving seat has an annular outer wall and a bottom wall, the snap-fit post protrudes from the bottom wall, a pair of snap-fit members extend from opposite sides of the snap-fit post, and the snap-fit members are spaced apart from the bottom wall of the receiving seat by a distance.

According to a further aspect of the disclosure, a pivot hole is formed in the receiving seat below the snap-fit post, the pivot hole extends along the axis of oscillation A2 perpendicular to the axis of rotation A1, and one end of the oscillating lever is pivotally connected in the pivot hole.

According to yet another aspect of the disclosure, a central hole for insertion of the snap-fit post is formed in the mounting block of the brush disc, the snap-fit guide slot comprises the portion of the follower recess and a notch that is recessed radially from the central hole relative to the axis of rotation A1, and the pair of snap-fit members are respectively guided through the portion of the follower recess and the notch to enter the snap-fit engagement slot.

According to yet another aspect of the disclosure, when the oscillating lever cam is engaged with the follower recess, oscillation of the oscillating lever about the axis of oscillation A2 drives the brush disc to rotate about the axis of rotation A1 within a predetermined rotation angle range, in which the snap-fit member remains engaged with the snap-fit engagement slot.

According to yet another aspect of the disclosure, the oscillating lever cam is formed in the shape of a single conical tooth, and the follower recess of the brush disc is correspondingly formed as a conical tooth groove for receiving the conical tooth; when the oscillating lever cam is engaged with the follower recess, the oscillating lever cam occupies the portion of the follower recess that serves as the snap-fit guide slot, to prevent the snap-fit member from disengaging through the snap-fit guide slot. The conical tooth drives the conical tooth groove to move; this shape cooperation between the cam and the follower recess is preferred. During the rotation of the brush disc, the conical tooth-shaped cam occupies the space of the follower recess that constitutes the guide slot part, preventing the snap-fit member from disengaging.

According to yet another aspect of the disclosure, an outer diameter of the brush disc base is greater than an outer diameter of the mounting block of the brush disc, and at least part of an outer surface of the mounting block rotatably fits with an inner surface of the annular outer wall of the receiving seat.

According to yet another aspect of the disclosure, a stop sleeve is further provided in the cavity of the brush head housing, the stop sleeve is inserted at the open end of the cavity of the brush head housing, thereby ensuring that the oscillating lever does not disengage from its position within the cavity of the brush head housing.

According to yet another aspect of the disclosure, the brush disc, the oscillating lever, and the brush head housing are respectively integrally formed of resin.

### Brief Description of the Drawings

For a more complete understanding of the disclosure, the following description of exemplary embodiments can be considered with reference to the drawings, in which:
FIG. 1 shows a cross-sectional view of a toothbrush head for an electric toothbrush according to a preferred embodiment of the disclosure.
FIG. 2 shows a perspective view of a brush head housing of the toothbrush head according to a preferred embodiment of the disclosure.
FIG. 3 shows a front view of the brush head housing of the toothbrush head according to a preferred embodiment of the disclosure.
FIG. 4 shows a perspective view of a brush disc of the toothbrush head according to a preferred embodiment of the disclosure.
FIG. 5 shows a bottom plan view of the brush disc of the toothbrush head according to a preferred embodiment of the disclosure.
FIG. 6 shows a cross-sectional view of the brush disc of the toothbrush head according to a preferred embodiment of the disclosure.

### List of Reference Signs:

1 toothbrush head
10 brush disc
11 brush disc base
12 mounting block
121 snap-fit guide slot
121' notch
123 snap-fit engagement slot
125 follower recess
126 central hole
20 brush head housing
21 cavity
210 open end
22 receiving seat
23 snap-fit member
24 snap-fit post
25 pivot hole
26 outer wall
27 bottom wall
30 oscillating lever
31 oscillating lever cam
32 tip
33 protrusion
50 stop sleeve
60 cleaning element
A1 axis of rotation
A2 axis of oscillation

### Detailed Description of Embodiments

The disclosure will be further described below in conjunction with specific embodiments and the accompanying drawings. In the following description, more details are set forth to facilitate a thorough understanding of the disclosure. However, it is obvious that the disclosure can be implemented in various other ways different from those described herein. Those skilled in the art can make similar generalizations and deductions according to practical application situations without departing from the connotation of the disclosure. Therefore, the content of this specific embodiment should not be construed as limiting the protection scope of the disclosure.

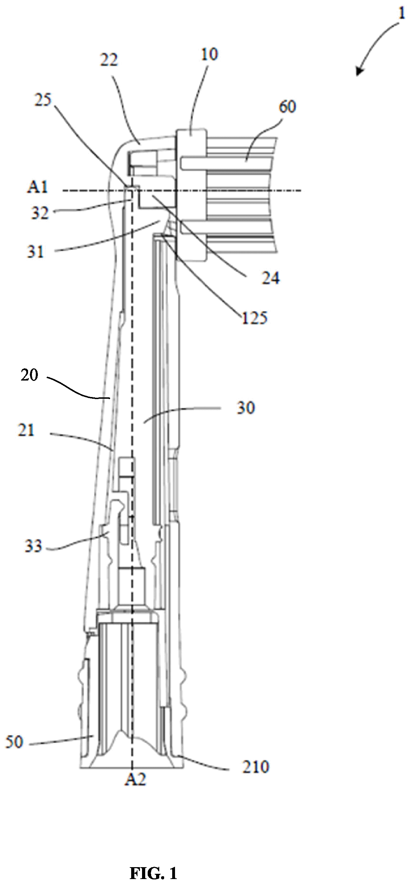

FIG. 1 shows a toothbrush head 1 for an electric toothbrush according to a preferred embodiment of the disclosure. The toothbrush head 1 mainly includes a brush head housing 20, a brush disc 10 mounted at one end of the brush head housing 20, and an oscillating lever 30 arranged in a cavity 21 of the brush head housing 20. The internal structure of the oscillating lever 30 is adapted for insertion of a drive shaft of the electric toothbrush. As the drive shaft rotates reciprocally, the oscillating lever 30 oscillates reciprocally about an axis of oscillation A2, so as to drive the brush disc 10 to rotate reciprocally about an axis of rotation A1 within a predetermined rotation angle range. A cleaning element 60, such as bristles, is mounted on the brush disc 10. The cleaning element 60 rotates reciprocally with the brush disc 10, so as to clean the teeth.

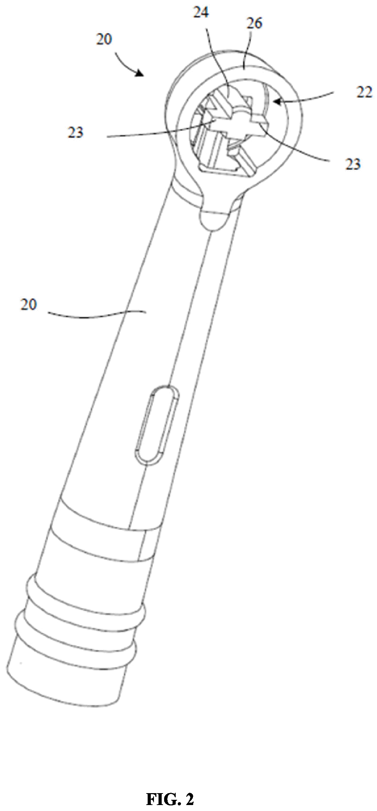

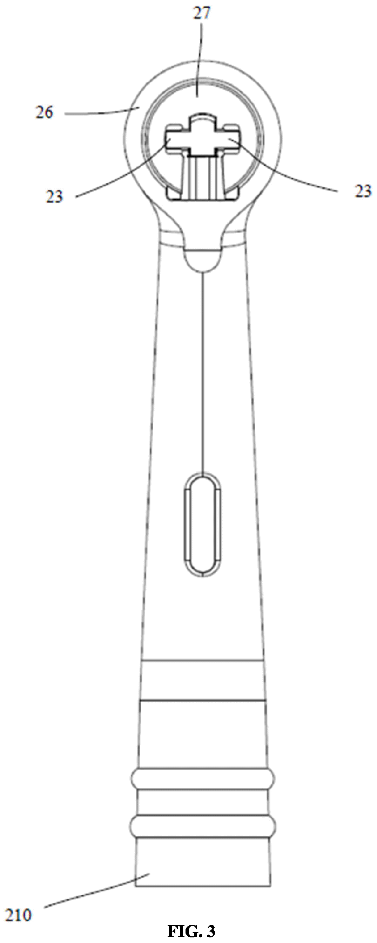

FIGS. 2 and 3 respectively show a perspective view and a plan view of the brush head housing 20 of the toothbrush head 1 according to a preferred embodiment of the disclosure. A receiving seat 22 for receiving the brush disc 10 is formed at one end of the brush head housing 20, and the cavity 21 extends from the receiving seat 22. The receiving seat 22 has a generally annular outer wall 26 and a bottom wall 27 on one side of the outer wall 26, and the receiving seat 22 is open on the other side for insertion of a mounting block 12 of the brush disc 10. The cavity 21 is shaped and sized to enable arrangement of the oscillating lever 30 and allow the oscillating lever 30 to oscillate reciprocally in the cavity about the axis of oscillation A2, and the cavity 21 of the brush head housing 20 is in communication with the receiving seat 22, so that the oscillating lever 30 is inserted into the receiving seat 22 from the cavity 21. The brush head housing 20 has a generally tapered outer contour, with a relatively small outer diameter at a front end adjacent to the receiving seat 22 and a relatively large outer diameter at an open end 210 of the housing 20.

FIG. 1 shows that the oscillating lever 30 is arranged in the cavity 21 of the brush head housing 20. The receiving seat 22 of the brush head housing 20 is integrally formed with a pivot hole 25. The pivot hole 25 extends substantially perpendicular to the axis of rotation A1, and a tip of the oscillating lever 30 is pivotally received in the pivot hole 25. The oscillating lever 30 further includes an oscillating lever cam 31. The oscillating lever cam 31 is formed near the tip of the oscillating lever 30 that is received in the pivot hole 25. The oscillating lever cam 31 is offset to one side of the axis of rotation A1. In other words, the oscillating lever cam 31 is offset relative to the tip received in the pivot hole 25.

The oscillating lever cam 31 is configured to engage with a follower recess 125 in the brush disc 10 and drive the follower recess to rotate. Preferably, the oscillating lever cam 31 is formed, for example, in the shape of a single conical tooth, and the follower recess 125 in the brush disc 10 is correspondingly a receiving tooth groove for the conical tooth. As the oscillating lever 30 rotates reciprocally about the axis of oscillation A2, the brush disc 10 can rotate about the axis of rotation A1 within a certain rotation angle range of, for example, 40° to 60°.

As shown in FIG. 1, the brush disc 10 is connected into the receiving seat 22 of the brush head housing 20 by means of a snap-fit structure. Specifically, as shown in FIG. 2, a snap-fit post 24 is formed in a protruding manner at a middle position of a bottom wall 27 of the receiving seat 22 of the brush head housing 20, and a top portion of the snap-fit post 24 extends outward to form a snap-fit member 23. In a preferred embodiment, a pair of snap-fit members 23 extend radially outward from two sides of the post in the form of protruding tabs, the snap-fit members 23 are spaced apart from an inner surface of the bottom wall 27 of the receiving seat 22 by a distance, and top surfaces of the snap-fit members 23 are preferably flush with or slightly lower than a top surface of the annular outer wall of the receiving seat 22.

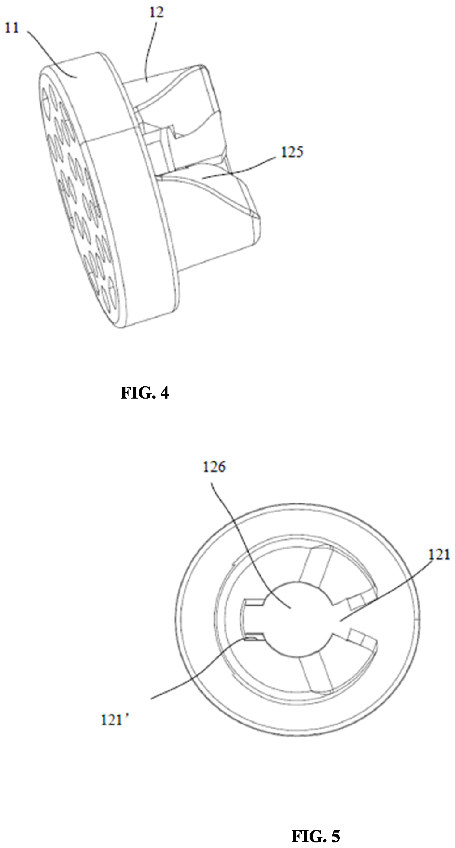

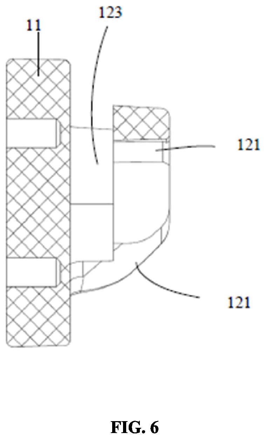

In addition, as shown in FIGS. 5 and 6, the brush disc 10 is formed with a brush disc base 11 and a mounting block 12 arranged on a lower side surface of the brush disc base 11, a central hole 126 is formed in the mounting block 12 of the brush disc 10 along the axis of rotation A1, and an outer diameter of the mounting block 12 is less than an outer diameter of the brush disc 10. The mounting block 12 has an outer surface having a diameter and size matching an inner surface of the outer wall 26 of the receiving seat 22, and is thus adapted to rotate within the receiving seat 22. In order to connect to the snap-fit member 23 arranged at a middle position of the receiving seat 22 of the brush head housing 20, the mounting block 12 of the brush disc 10 is formed with a snap-fit guide slot 121 and a snap-fit engagement slot 123. The snap-fit guide slot 121 is farther away from the brush disc base 11 than the snap-fit engagement slot 123, and the snap-fit guide slot 121 is in communication with the snap-fit engagement slot 123. As shown in FIG. 5, the snap-fit guide slot 121 is configured such that the snap-fit member 23 in the receiving seat 22 can be inserted and guided into the snap-fit engagement slot 123 and be rotated into engagement with the snap-fit engagement slot 123. In a preferred embodiment, after inserted into the snap-fit guide slot 121, the snap-fit member 23 is moved toward the brush disc base 11, and is then rotated 90 degrees and enters the snap-fit engagement slot 123, thereby achieving engagement between the snap-fit member 23 and the snap-fit engagement slot 123. Conversely, when the brush disc 10 is rotated 90 degrees in the opposite direction, the snap-fit member 23 is aligned with the snap-fit guide slot 121 and can thus pass through the snap-fit guide slot 121 and disengage from the mounting block 12 of the brush disc 10. When the snap-fit member 23 in the receiving seat 22 is engaged with the snap-fit engagement slot 123 of the brush disc 10, the brush disc 10 cannot be detached from the receiving seat 22. However, a thickness of the snap-fit member 23 is less than a width of the snap-fit engagement slot 123 along the axis of rotation A1, so that the snap-fit member 23 is in a loose fit in the snap-fit engagement slot 123, and thus the brush disc 10 can still rotate reciprocally and freely relative to the receiving seat 22.

In a preferred embodiment, as shown in FIG. 3, the snap-fit members 23 on the receiving seat 22 extends from the post 24 in a direction perpendicular to the axis of oscillation A2 and the axis A1. A portion of the follower recess 125 serves as the snap-fit guide slot 121, and the follower recess 125 is in communication with the snap-fit engagement slot 123. Specifically, in a preferred embodiment, the snap-fit guide slot 121 includes a portion of the follower recess 125 and a notch 121' that is radially opposite the follower recess 125. As shown in FIG. 5, the notch 121' is recessed radially from the central hole 126 of the mounting block 12 into the mounting block 12 of the brush disc 10 relative to the axis of rotation A1. When the snap-fit members 23 on the housing 20 are inserted into the snap-fit guide slot 121 (i.e., the two opposite snap-fit members 23 are respectively inserted into the notch 121' and the follower recess 125) and rotated 90 degrees, the snap-fit members 23 engage with the snap-fit engagement slot 123. At this point, the follower recess 125 and the notch 121' are aligned along the axis of oscillation A2, and after the oscillating lever 30 is inserted along the cavity, the oscillating lever cam can be inserted into the follower recess 125. During rotation of the brush disc 10 with the oscillating lever 30 within a predetermined rotation angle range, the snap-fit members 23 remain engaged with the snap-fit engagement slot 123. In particular, the oscillating lever 30 occupies the space of the portion of the follower recess 125 that serves as the snap-fit guide slot, such that the snap-fit members 23 cannot disengage from the mounting block 12 along the guide slot 121. Therefore, according to the disclosure, the connection between the brush disc 10 and the receiving seat 22 is highly reliable, thereby avoiding the potential safety hazard of accidental detachment of the brush disc 10 from the receiving seat.

Therefore, in the toothbrush head 1 according to the disclosure, a portion of the oscillating lever 23 remains within a portion of the snap-fit guide slot 121 during the oscillating operation, and thus the oscillating lever 30 functions to lock the engagement between the receiving seat 22 and the brush disc 10. As described above, the oscillating lever cam 31 of the oscillating lever 30 is engaged with the follower recess 125 of the mounting block 12 of the brush disc 10, and the snap-fit members 23 remain engaged with the snap-fit engagement slot 123, so that the snap-fit members 23 cannot enter the snap-fit guide slot 121, and thus the engagement between the oscillating lever cam 31 and the follower recess 125 functions to prevent the receiving seat 22 from detaching from the brush disc 10.

As shown in FIG. 1, a lower end of the brush head housing 20 is open, and the oscillating lever 30 is inserted into the cavity 21 of the brush head housing 20 through the open end 210. In addition, a stop sleeve 50 is further provided at the open end 210 of the brush head housing 20, and is also inserted in the cavity 21 of the brush head housing 20. The stop sleeve 50 has a clearance with the oscillating lever 30 to allow the oscillating lever 30 to oscillate within the cavity 21 and also prevent the oscillating lever 30 from disengaging from the cavity 21, thereby also ensuring that the oscillating lever cam 31 does not disengage from the follower recess 125. An engaging tab is provided on an outer surface of the stop sleeve 50, and an engaging hole is provided in the brush head housing 20. After the stop sleeve 50 is inserted into the cavity 21, the engaging tab enters and engages with the engaging hole, so that the sleeve 50 is kept in a fixed position relative to the brush head housing 20. It should be appreciated that the sleeve 50 may be fixedly connected to the brush head housing by means of other fixing connection structures.

Furthermore, as shown in FIG. 1, the oscillating lever 30 is integrally formed with a cantilever at a position away from the oscillating lever cam 31. The cantilever is provided with a protrusion 33, and a step portion is correspondingly formed in the cavity 21 of the brush head housing 20. The fitting between the protrusion 33 and the step portion provides auxiliary positioning of the oscillating lever 30 relative to the cavity 21.

A method for mounting the toothbrush head 1 according to the disclosure is described below. Firstly, the snap-fit member 23 on the receiving seat 22 of the brush head housing 20 is aligned with the snap-fit guide slot 121 in the mounting block 12 of the brush disc 10, the brush disc 10 is inserted into the receiving seat 22 along the axis of rotation A1, the brush disc is then rotated 90 degrees relative to the receiving seat, and the snap-fit member 23 enters the snap-fit engagement slot 123 to achieve a snap-fit connection. Next, the oscillating lever 30 is inserted from the open end 210 of the cavity 21 of the brush head housing 20, with a tip 32 of the oscillating lever 30 inserted into the pivot hole 25 in the receiving seat 22. At this point, the oscillating lever cam 31 is also engaged with the follower recess 125 of the mounting block 12 of the brush disc, and the protrusion 33 on the cantilever of the oscillating lever abuts against the step portion in the cavity 21. Finally, the stop sleeve 50 is inserted from the open end 210 of the cavity 21 and abuts against one end of the oscillating lever 30 to retain the oscillating lever 30 in the cavity 21. In this way, the mounting of the toothbrush head 1 is completed.

Preferably, the brush disc 10, the brush head housing 20, the oscillating lever 30 and the stop sleeve 50 are all made of plastic, and are engaged and mounted together.

The toothbrush head 1 according to the disclosure enables reciprocally rotatable connection by means of engagement of the snap-fit member 23 with the snap-fit engagement slot 123. In the toothbrush head 1 of the disclosure, the respective surfaces of the snap-fit member 23 and the snap-fit engagement slot 123 that are perpendicular to the axis of rotation A1 abut against each other. When the opposing surfaces abut against each other, the snap-fit member 23 is retained and received in the snap-fit engagement slot 123 without disengagement; and only when the snap-fit member 23 is rotated to the position of the snap-fit guide slot 121 and the opposing surfaces no longer abut against each other, the snap-fit member 23 can be disengaged from the snap-fit engagement slot 123, and the brush disc 10 can be detached from the receiving seat 22. In the assembled toothbrush head 1, when the oscillating lever 30 is engaged with the brush disc 10, since the oscillating lever cam 31 occupies the follower recess that forms a portion of the snap-fit guide slot, the snap-fit member 23 on the receiving seat 22 cannot pass through the snap-fit guide slot 121, so that the snap-fit member 23 can be reliably connected to the snap-fit engagement slot 123, and the brush disc 10 cannot be detached from the brush head housing 20 unless the oscillating lever 30 is removed. Therefore, the disclosure achieves both a simple assembly process and a reliable rotatable connection between the brush disc and the brush head housing.

Although the disclosure is disclosed above with preferred embodiments, they are not intended to limit the disclosure. Any person skilled in the art can make possible variations and modifications without departing from the spirit and scope of the disclosure. Therefore, any modifications, equivalent changes, and modifications made to the above embodiments based on the technical essence of the disclosure, without departing from the content of the technical solution of the disclosure, shall fall within the protection scope defined by the claims of the disclosure.

## Claims

1. A toothbrush head for an electric toothbrush, the toothbrush head comprising:
a brush disc having a brush disc base and a mounting block formed on a lower side surface of the brush disc base;
a brush head housing forming a cavity, one end of the brush head forming a receiving seat for receiving the mounting block, the other end of the brush head opening to an open end of the cavity, and the brush disc being arranged in the receiving seat and rotating about an axis of rotation (A1); and
an oscillating lever received in the cavity in an oscillatable manner and engaging with and driving the brush disc;
wherein the receiving seat is provided with a snap-fit member arranged on a snap-fit post protruding from a middle position of the receiving seat;
a snap-fit guide slot and a snap-fit engagement slot are formed in the mounting block of the brush disc, the snap-fit guide slot is in communication with the snap-fit engagement slot, and the snap-fit member is capable of being inserted into the snap-fit guide slot along the axis of rotation (A1) and into the snap-fit engagement slot;
when the oscillating lever is engaged with the brush disc, a portion of the oscillating lever is inserted into the snap-fit guide slot to prevent the snap-fit member at the receiving seat from disengaging from the snap-fit engagement slot by means of the snap-fit guide slot.

2. The toothbrush head of claim 1, wherein
the oscillating lever comprises an integrally formed oscillating lever cam, the oscillating rod cam being formed on an outer surface of an end of the oscillating lever adjacent to the receiving seat and being offset relative to an axis of oscillation A2 of the oscillating lever;
the mounting block of the brush disc is formed with a follower recess, and the oscillating lever drives the brush disc to rotate reciprocally about the axis of rotation (A1) by means of engagement of the oscillating lever cam with the follower recess;
a portion of the oscillating lever is the oscillating lever cam, the snap-fit guide slot comprises a portion of the follower recess, and the oscillating lever cam prevents the snap-fit member from disengaging through the snap-fit guide slot.

3. The toothbrush head of claim 2, wherein the receiving seat has an annular outer wall and a bottom wall, and a snap-fit post protrudes from the bottom wall, and
a pair of snap-fit members extend from opposite sides of the snap-fit post, and the snap-fit tabs are spaced apart from the bottom wall of the receiving seat by a distance.

4. The toothbrush head of claim 3, wherein a pivot hole is formed in the receiving seat below the snap-fit post, the pivot hole extends along the axis of oscillation (A2) perpendicular to the axis of rotation (A1), and one end of the oscillating lever is pivotally connected in the pivot hole.

5. The toothbrush head of claim 3, wherein a central hole for insertion of the snap-fit post is formed in the mounting block of the brush disc, the snap-fit guide slot comprises the portion of the follower recess and a notch that is recessed radially from the central hole relative to the axis of rotation (A1), and the pair of snap-fit members are respectively guided to pass through the portion of the follower recess and the notch to enter the snap-fit engagement slot.

6. The toothbrush head of claim 1 or 5, wherein when the oscillating lever cam is engaged with the follower recess, oscillation of the oscillating lever about the axis of oscillation (A2) drives the brush disc to rotate about the axis of rotation (A1) within a predetermined rotation angle range in which the snap-fit member remains engaged with the snap-fit engagement slot.

7. The toothbrush head of claim 5, wherein the oscillating lever cam is formed in the shape of a single conical tooth, and the follower recess of the brush disc is correspondingly formed as a conical tooth groove for receiving the conical tooth;
when the oscillating lever cam is engaged with the follower recess, the oscillating lever cam occupies the portion of the follower recess that serves as the snap-fit guide slot, to prevent the snap-fit member from disengaging through the snap-fit guide slot.

8. The toothbrush head of claim 1, wherein an outer diameter of the brush disc base is greater than an outer diameter of a mounting block of the brush disc; and
at least part of an outer surface of the mounting block rotatably fits with an inner surface of the annular outer wall of the receiving seat.

9. The toothbrush head of claim 1, wherein a stop sleeve is further provided in the cavity of the brush head housing, and the stop sleeve is inserted at the open end of the cavity of the brush head housing.

10. The toothbrush head of claim 1, wherein the brush disc, the oscillating lever, and the brush head housing are integrally formed of resin.
